# EUROPÄISCHE PATENTSCHRIFT

(11) **EP 2 292 940 B1**
(45) Veröffentlichungstag und Bekanntmachung des Hinweises auf die Patenterteilung: **07.10.2015**
(21) Anmeldenummer: 10008806.1
(22) Anmeldetag: 24.08.2010
(51) Int. Cl.: F16B 37/06

(54) **Selbststanzendes Mutterelement und Zusammenbauteil bestehend aus dem Mutterelement und einem Blechteil**
Self-stamping nut element and assembly component comprising the nut element and a sheet metal section
Elément d'écrou auto-perforant et composant constitué de l'élément d'écrou et d'un élément de tôle

(30) Priorität: 02.09.2009 DE 102009039817
(43) Veröffentlichungstag der Anmeldung: 09.03.2011
(73) Patentinhaber: Profil Verbindungstechnik GmbH & Co. KG, 61381 Friedrichsdorf (DE)
(72) Erfinder: Babej, Jiri, 35423 Lich (DE); Sowa, Christian, 63075 Offenbach (DE); Humpert, Richard, 61231 Bad Nauheim (DE); Vieth, Michael, 61118 Bad Vilbel (DE)
(74) Vertreter: Manitz, Finsterwald & Partner GbR

(56) Entgegenhaltungen:
- WO-A1-2005/050034
- WO-A1-2007/121998

## Beschreibung

Die vorliegende Erfindung betrifft ein selbststanzendes Mutterelement, das zum Einpressen in ein Blechteil ausgelegt ist, wobei das Mutterelement folgende Merkmale aufweist: ein einen Flansch bildendes Kopfteil, eine mittlere mit einem Gewinde versehene oder vorsehbare, einen Nenndurchmesser aufweisende Bohrung im Kopfteil, die zur Aufnahme eines Bolzenelements ausgelegt ist und eine mittlere Längsachse aufweist, eine in einer Ebene zumindest im Wesentlichen senkrecht zur mittleren Längsachse stehende am Flansch ausgebildete Blechanlagefläche sowie einen sich auf der Seite der Blechanlagefläche vom Kopfteil in Richtung der Längsachse weg erstreckenden Stanzabschnitt, wobei der Stanzabschnitt unterhalb der Blechanlagefläche eine umlaufende Rille aufweist und der Stanzabschnitt eine Stanzkante an seiner freien Stirnseite aufweist.

Ein selbststanzendes Mutterelement der oben genannten Art ist aus der WO2005/050034 bekannt, die zum europäischen Patent EP-B-1690013 geführt hat. Diese zeigt ein selbststanzendes Mutterelement, das mit verschiedenen Blechdicken verwendet werden kann. Das Mutterelement hat jedoch eine relativ aufwändige Formgebung und ist nicht für Anwendungen mit höherfesten Blechteilen geeignet, gedacht oder ausgelegt.

Ferner betrifft die vorliegende Erfindung ein Zusammenbauteil bestehend aus einem derartigen Mutterelement, das an einem Blechteil angebracht ist.

Auf dem Gebiet der Verbindungselemente, die bei der Anfertigung von Blechteilen an diesen maschinell angebracht werden, unterscheidet man zwischen Einpresselementen einerseits und Nietelementen andererseits. Einpresselemente zeichnen sich dadurch aus, dass sie bei Anbringung an ein Blechteil zumindest nicht absichtlich verformt werden, sondern das Blechteil selbst wird verformt und in Eingriff mit Formmerkmalen des Einpresselementes gebracht, wodurch das Einpresselement verdrehsicher und auspresssicher am Blechteil befestigt wird. Bei Nietelementen wird das Element bei der Anbringung am Blechteil absichtlich verformt, meistens um ein Nietbördel auszubilden, wodurch das Blechteil zwischen Nietbördel und einem Flanschteil eingefangen wird, um auch hier eine verdrehsichere und auspresssichere Verbindung zu erreichen.

Sowohl Einpresselemente als auch Nietelemente kennt man ferner als selbststanzende Elemente. Die Bezeichnung selbststanzend ist so zu verstehen, dass das entsprechende Element sein eigenes Loch im Blechteil stanzt, natürlich nur dann, wenn eine ausreichende Kraft auf das selbststanzende Element ausgeübt wird, beispielsweise von einer Presse, von einem Roboter oder einer kraftbetätigten Zange, die das selbststanzende Element gegen das Blechteil presst, und das Blechteil auf der dem Element abgewandten Seite auf eine entsprechende Matrize abgestützt wird.

Es war bisher im Fahrzeugbau üblich, selbststanzende Elemente mit Blechteilen zu verwenden, die eine Festigkeit unterhalb etwa 300 MPa aufweisen. Die selbststanzenden Elemente, die dann zur Anwendung gelangen, haben üblicherweise eine Festigkeit im Bereich zwischen 700 und 900 MPa und in Ausnahmefällen bis zu etwa 1250 MPa, was durchaus ausreicht, um bei der Anbringung des Verbindungselements am Blechteil ein Loch im Blechteil auszustanzen, insbesondere dann, wenn das Blechteil eine Dicke von unterhalb etwa 3 mm aufweist. Festigkeiten der Elemente bis zu etwa 850 MPa gelten beispielsweise für Elemente der Klasse 8, während höhere Festigkeiten für Elemente der Klassen 10 und 12 gelten, die normalerweise eine Wärmebehandlung und/oder eine bestimmte Materialauswahl der entsprechenden Elemente erforderlich machen.

Bei den verwendeten Verbindungselementen hat das Material des Verbindungselementes im Rohzustand üblicherweise eine Festigkeit von etwa 380 MPa. Diese Festigkeit erhöht sich aber auf Werte im Bereich zwischen 700 und 900 MPa alleine durch die Kaltverformung, die gebraucht wird, um ausgehend von einem Stabmaterial ein Befestigungselement durch Kaltverformung zu erzeugen.

Für manche Zwecke werden Verbindungselemente benötigt, die eine höhere Festigkeit als 900 MPa aufweisen. Diese werden dann aus einem Material hergestellt, das sich durch eine Wärmebehandlung härten lässt, wodurch eine höhere Festigkeit erreicht wird. Solche Wärmebehandlungen sind jedoch in vielen Fällen unerwünscht. Sie stellen ein fremdes Verfahren im Vergleich zu der Herstellung der Verbindungselemente mit Kaltverformung dar und werden üblicherweise nicht einmal in der gleichen Fabrik durchgeführt, in der die Verbindungselemente hergestellt werden, wodurch ein erheblicher Zeit- und Kostenaufwand betrieben werden muss, um wärmebehandelte Elemente höherer Festigkeit zu erzeugen.

Auf der anderen Seite werden im Fahrzeugbau zunehmend Bleche mit höherer Festigkeit verwendet und teilweise auch wärmebehandelte Blechteile, die Festigkeiten oberhalb des üblichen Festigkeitsbereiches von 700 bis 900 MPA für Verbindungselemente aufweisen. Solche Blechteile mit höherer Festigkeit machen es einerseits möglich, mit dünneren Blechen zu arbeiten, wodurch Gewicht gespart werden kann, machen es aber andererseits extrem schwierig, mit selbststanzenden Elementen zu arbeiten. Blechteile mit hoher Festigkeit werden aber auch im Fahrzeugbau benötigt, die größere Dicken aufweisen, da es an einigen Stellen im Fahrzeug Anwendungen gibt, bei denen auch ein dickeres Blechteil bzw. Hochfestigkeitsblech mit Vorteil verwendet werden kann.

Ferner besteht derzeit im Fahrzeugbau Interesse, an gewissen Stellen mit Blechteilen mit einer Dicke größer als 3,5 mm zu arbeiten, wobei dann die Blechteile Festigkeiten aufweisen, die im oben angegebenen Bereich von 300 MPa liegen. Ein Beispiel für solche Anwendungen ist im Fahrgestellbereich von LKWs zu finden.

Der vorliegenden Erfindung liegt die Aufgabe zugrunde, ein selbststanzendes Mutterelement vorzusehen, das mit einer Festigkeit im Bereich zwischen 700 und 900 MPA selbststanzend in Blechteilen mit höherer Festigkeit oder mit Dicken größer als 3,5 mm eingebracht werden können. Es handelt sich bei solchen erfindungsgemäßen Mutterelementen weitestgehend um Einpresselemente. Ferner soll das erfindungsgemäße Mutterelement bzw. das erfindungsgemäße Zusammenbauteil relativ preisgünstig herstellbar sein.

Zur Lösung dieser Aufgabe wird bei einem Mutterelement der eingangs genannten Art erfindungsgemäß vorgesehen, dass das selbststanzendes Mutterelement eine Festigkeit im Bereich zwischen 700 und 900 MPa, in Ausnahmefällen bis zu 1250 MPa aufweist und zum selbststanzenden Anbringen des Mutterelements in ein Blechteil höherer Festigkeit oder in ein Blechteil mit einer Dicke größer als 3,5 mm das Mutterelement derart ausgelegt ist, und dass die Stanzkante von der dieser benachbarten Begrenzung der Rille durch eine Umfangsfläche mit einer axialen Höhe beabstandet ist, die mindestens 30 % und vorzugsweise mindestens 50 % der Blechdicke entspricht, wobei die radiale Wanddicke des Stanzabschnitts im Bereich seiner freien Stirnseite von der Außenseite des Stanzabschnitts bis zum Nenndurchmesser einer Dicke zwischen dem 1,2- bis 1,8- und vorzugsweise dem 1,5-fachen der vorgesehenen Blechteildicke entspricht.

Das entsprechende Zusammenbauteil bestehend aus dem selbststanzenden Mutterelement und einem Blechteil zeichnet sich dadurch aus, dass das Blechteil ein Stanzloch mit einer Form entsprechend der Form des Stanzabschnitts aufweist, dass das Material des Blechteils auf der der Blechanlagefläche abgewandten Seite des Blechteils benachbart zum Stanzabschnitt eine den Stanzabschnitt umgebende Vertiefung aufweist, und dass das Material des Lochrandes aufgrund der Ausbildung der Vertiefung in die Rille hinein verdrängt ist.

Es ist nämlich erfindungsgemäß überraschend festgestellt worden, dass bei geeigneter Ausbildung des Stanzabschnitts, in dem Sinne, dass dieser mit einem zumindest im Wesentlichen zylindrischen Abschnitt mit einer axialen Höhe versehen wird, die mindestens 50 % der Blechdicke, vorzugsweise mehr, entspricht, auch dann im Stande ist, ein Loch im Blechteil zu stanzen, wenn das Blechteil eine höhere Festigkeit im Bereich von größer als 900 bis über 1600 MPa und vorzugsweise von 1500 MPa aufweist, oder wenn das Blechteil eine Dicke größer als 3,5 mm aufweist.

Die Erfindung erschöpft sich aber nicht nur im Ausstanzen des entsprechenden Stanzloches, sondern das Blechteil muss nach Anfertigung des Stanzloches am Mutterelement so befestigt werden, dass das Mutterelement verdrehsicher und auspresssicher am Blechteil anliegt.

Zu diesem Zweck wird erfindungsgemäß die umlaufende Rille am Stanzabschnitt unterhalb der Blechanlagefläche vorgesehen. Es wurde festgestellt, dass es auch bei höherfesten oder dickeren Blechen durchaus möglich ist, mittels einer Matrize mit einer entsprechenden Ringnase das Blechmaterial im Bereich des Lochrandes so zu verformen, dass eine Vertiefung benachbart zum Stanzabschnitt entsteht, und das verdrängte Blechmaterial des Lochrandes dann in die umlaufende Rille hineinverdrängt wird. Es entsteht zunächst aufgrund der Verdrängung eine erheblich Lochlaibung, die für eine Verdrehsicherung sorgt. Dadurch, dass das Blechmaterial in die umlaufende Rille hineinverformt wird und diese auf der einen Seite der Blechanlagefläche und auf der anderen Seite von dem auf der abgewandten Seite des Blechteils von der Blechanlagefläche angeordneten Bereich des Stanzabschnitts eingefasst wird, entsteht ein recht hoher axialer Auspresswiderstand.

Sollte eine höhere Verdrehsicherheit gewünscht werden, kann dies auf verschiedene Art und Weise realisiert werden. Ein Möglichkeit besteht darin, das Blechteil und/oder das Funktionselement mit einer Klebeschicht zu versehen, beispielsweise eine solche, die bei höheren Drücken aushärtet. Entsprechend höhere Drücke entstehen bei der Anbringung des Befestigungselements am Blechteil, wodurch die Verdrehsicherung dann erreicht bzw. begünstigt wird.

Eine andere Möglichkeit besteht darin, den Stanzabschnitt bzw. die Rille in Draufsicht polygonal mit gerundeten Ecken an den Übergangen von einer Seite des Polygons zur nächsten zu gestalten. Durch die polygonale Form des Stanzabschnitts bzw. der Rille wird eine sehr hohe Verdrehsicherung gewährleistet.

Auch das Kopfteil kann eine der polygonalen Form des Stanzabschnitts sowie der Rille entsprechende polygonale Form aufweisen, ebenfalls mit gerundeten Ecken. Die gerundeten Ecken sind deshalb wichtig, weil gerade bei höherfesten Blechteilen die scharfen Kanten, die sonst an den Übergängen von einer Seite des Polygons zur nächsten entstehen würden, zu einer erheblichen, nicht zu unterschätzenden Gefahr führen würden, dass sich Ermüdungsrisse bilden und die Verbindung, die mit dem Mutterelement angestrebt wird, im Betrieb versagt. Durch die gerundete Form des Kopfteils wird darüber hinaus sichergestellt, dass auf der radial äußeren Seite der Blechanlagefläche ebenfalls keine spannungserhöhenden Verformungen des Blechteils auftreten, wodurch die Lebensdauer herabgesetzt werden könnte.

Um diese polygonale Form des Stanzabschnitts bzw. der Rille bzw. des Kopfteils vernünftig auszunutzen, soll sie aus der Gruppe quadratisch, rechteckig, fünfeckig oder sechseckig ausgewählt werden.

In einer Ausführung, bei der der Stanzabschnitt und die Rille eine polygonale Form aufweisen, besteht auch die Möglichkeit, das Kopfteil in Draufsicht kreisförmig zu gestalten, sofern die Ausrichtung des Kopfteils um die Längsachse des Elements gewährleistet werden kann, da bei einer polygonalen Form des Stanzabschnitts bzw. der Rille die Stanzmatrize eine entsprechende Form bzw. eine entsprechende Stanzöffnung aufweisen müsste und das Element muss dann zwangsläufig mit der Matrize winkelmäßig ausgerichtet werden. Eine solche Ausrichtung des Elements könnte beispielsweise über zwei konusförmige Vertiefungen in der dem Blechteil abgewandten Stirnseite des Kopfteils erreicht werden, wobei entsprechende konusförmige Vorsprünge am Stempel des Setzkopfs in diese konusförmigen Vertiefungen eingreifen und für eine entsprechende Positionierung des Elements sorgen könnten. Auch kämen ein oder zwei Nuten oder Rippen am Umfang des Kopfteils als Ausrichtungshilfe in Frage.

Es besteht aber auch die Möglichkeit, das gesamte Mutterelement so zu gestalten, dass der Stanzabschnitt bzw. die Rille und das Kopfteil in Draufsicht zumindest im Wesentlichen kreisrund sind. Es müssen dann andere Maßnahmen getroffen werden, um die Verdrehsicherung sicherzustellen. Dies kann dann beispielsweise dadurch erfolgen, dass Verdrehsicherungsnasen vorgesehen sind, die entweder die Form von sich in axialer Richtung erstreckenden Rippen am Stanzabsc-hnitt aufweisen, die am zylindrischen Abschnitt und/oder in der Rille angeordnet sein können, oder die Form von sich innerhalb der Rille radial erstreckenden Rippen aufweisen, die in Seitensicht zumindest im Wesentlichen dreieckig sind. Diese Verdrehsicherungsrippen bzw. -nasen führen dann bei der Anbringung des Mutterelements an das Blechteil zu einer entsprechenden Verformung des Blechteils, wodurch die Verdrehsicherung gewährleistet wird.

Ferner besteht entsprechend der europäischen Patentanmeldung 05013265.3 (EP 1609561) auch die Möglichkeit, Verdrehsicherungsmerkmale im Blechteil zu erzeugen, bevor das Mutterelement am Blechteil befestigt wird, wodurch ebenfalls die erforderliche Verdrehsicherung erreicht werden kann.

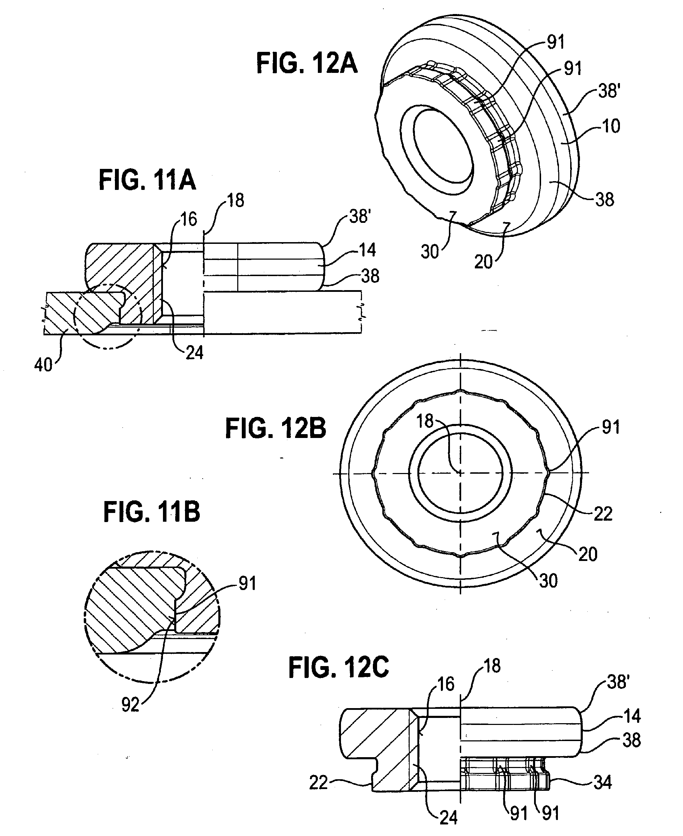

An dieser Stelle soll auf verschiedene Schriften zum Stand der Technik verwiesen werden. Die alte US-Schrift US-A-3,775,791 offenbart Befestigungselemente, die in Draufsicht in etwa quadratisch sind, die an zwei entgegengesetzten Seiten Nuten aufweisen, die zur Aufnahme von Blechmaterial gedacht sind. Die in Fig. 12 der genannten Schrift gezeigten Elemente sind zur selbststanzenden Einbringung in ein Blechteil gedacht. Es ist jedoch der genannten Schrift kein Hinweis zu entnehmen, wonach solche Elemente sich für Blechteile höherer Festigkeit eignen würden. In der Praxis ist das Gegenteil der Fall, da die scharfkantige Ausführung im Bereich der Nuten zu Ermündungsrissen im Blechteil führen, was gerade bei hochfesten Blechteilen ein Problem ist.

Die WO 94/01688 offenbart in Fig. 17 ein Mutterelement mit einem Kopfteil, das einen Flansch bildet und mit einem Nietabschnitt, der unterhalb der Blechanlagefläche des Kopfteils angeordnet ist. Das Element ist nicht als selbststanzendes Element gedacht, und es weist darüber hinaus keine umlaufende Rille oberhalb eines Stanzabschnitts auf. Die verjüngte Form des Nietabschnitts bildet zwar eine rillenartige Vertiefung um den Stanzabschnitt herum, nur erstreckt sich diese Vertiefung in axialer Richtung des Kopfteils weiter in das Kopfteil hinein als die sich radial erstreckenden Rippen an der Blechauflagefläche des Kopfteils, die für die Verdrehsicherung sorgen. Solche Verdrehsicherungsrippen sind allerdings mit hochfesten Blechen nicht anwendbar, da sie aufgrund des weicheren Materials des Kopfteils bei der Anbringung des Mutterelements am Blechteil platt gedrückt werden. Im Übrigen entspricht die Vertiefung dann nicht mehr einer umlaufenden Rille an einem Stanzabschnitt unterhalb der Blechauflagefläche.

Das Element gemäß US-A-3,253,631 ist zwar als selbststanzendes Element ausgebildet, aber auch hier ist die entsprechende Rille nicht unterhalb der Blechauflagefläche angeordnet, sondern befindet sich axial innerhalb des Kopfteils des Elements. Auch ist das Element dieser US-Patentschrift nicht für die Anwendung mit höherfesten Blechteilen oder dickeren Blechteilen gedacht.

Die FR-A-2598189 befasst sich auch mit einem Einpresselement. Aber auch hier ist die entsprechende Rille deutlich innerhalb des Kopfteils des Elements versetzt angeordnet, wobei der Bereich des Kopfteils radial außerhalb der Rille in das Blechteil selbst hineingepresst wird, wodurch eine unerwünschte Verdünnung des Blechteils eintritt. Das Element gemäß der französischen Schrift ist auch nicht als selbststanzendes Element gedacht und auch nicht für die Anwendung mit höherfesten Blechteilen geeignet.

Bevorzugte Ausführungsformen des Mutterelement bzw. des Zusammenbauteils der vorliegenden Erfindung gehen aus den Unteransprüchen sowie aus der noch folgenden Beschreibung von Beispielen anhand der beifügten Zeichnungen hervor, in welchen jeweils maßstabsgetreu folgendes gezeigt ist:
- Fig. 1A-1C: Darstellungen einer ersten erfindungsgemäßen Ausführung eines Mutterelements in einer perspektivischen Darstellung (Fig. 1A), eine axiale Ansicht der in Fig. 1A linken Stirnseite des Elements (Fig. 1B) und eine Seitenansicht des erfindungsgemäßen Elements teilweise in einem axialen Halbschnitt (Fig. 1C),
- Fig. 2A: die Werkzeuge, die zur Anbringung des erfindungsgemäßen Mutterelements gemäß Fig. 1A in ein Blechteil verwendet werden,
- Fig. 2B: eine Ansicht entsprechend der Fig. 1C, jedoch mit Mutterelement am Blechteil befestigt,
- Fig. 2C: eine vergrößerte Darstellung des Formschlusses zwischen dem erfindungsgemäßen Mutterelement und dem Blechteil gemäß Fig. 2B,
- Fig. 3A-3C Fig. 4A-4C Fig. 5A-5C: Darstellungen entsprechend der Fig. 1A-1C, jedoch von anderen erfindungsgemäßen Mutterelementen,
- Fig. 6A: eine Darstellung entsprechend der Fig. 2A, jedoch von den Werkzeugen, die verwendet werden, wenn das erfindungsgemäße Mutterelement an einem verhältnismäßig dünnen Blechteil angebracht wird,
- Fig. 6B, 6C: Darstellungen entsprechend den Fig. 2B und 2C, jedoch für das Zusammenbauteil bestehend aus einem verhältnismäßig dünnen Blechteil und einem erfindungsgemäßen Element,
- Fig. 7A: modifizierte Werkzeuge, die zur Anwendung gelangen können,
- Fig. 7B: eine Draufsicht auf das unter Anwendung des Werkzeugs gemäß Fig. 7A erzeugte Zusammenbauteil mit Angabe der Schnittebene C-C,
- Fig. 7C: die Schnittzeichnung entsprechend der Schnittebene C-C in Fig. 7B,
- Fig. 7D: eine vergrößerte Darstellung es umkreisten Bereichs der Darstellung gemäß Fig. 7C,
- Fig. 8A, 8B: eine perspektivische Darstellung des Zusammenbauteils, dass dann resultiert, wenn das Mutterelement gemäß Fig. 1A-1C an einem verhältnismäßig dicken Blechteil angebracht wird, und zwar von oben in Fig. 8A und von unten Fig. 8B,
- Fig. 9A, 9B: Darstellungen entsprechend der Fig. 8A und 8B, jedoch mit einem verhältnismäßig dünnen Blechteil,
- Fig. 10A, 10B: Zeichnungen entsprechend den Fig. 8A, 8B, jedoch bei der Anordnung des Mutterelements gemäß Fig. 1A-1C in bzw. an einer Sicke im Blechteil,
- Fig. 11A, 11B: Darstellungen entsprechend den Fig. 2B und 2C, jedoch bei Anwendung eines Mutterelements mit Verdrehsicherungsrippen in der Rille sowie an der Umfangsfläche des Stanzabschnitts unterhalb der Rille,
- Fig. 12A-12C: Darstellungen entsprechend den Fig. 1A-1C, jedoch von einem erfindungsgemäßen Mutterelement mit Verdrehsicherungsrippen, die sich axial am Stanzabschnitt entlang erstrecken, und zwar an der Umfangsfläche und in der Rille, und
- Fig. 13A-13C: Darstellung entsprechend den Fig. 12A-12C, jedoch mit einer anderen Anordnung der Verdrehsicherungsrippen.

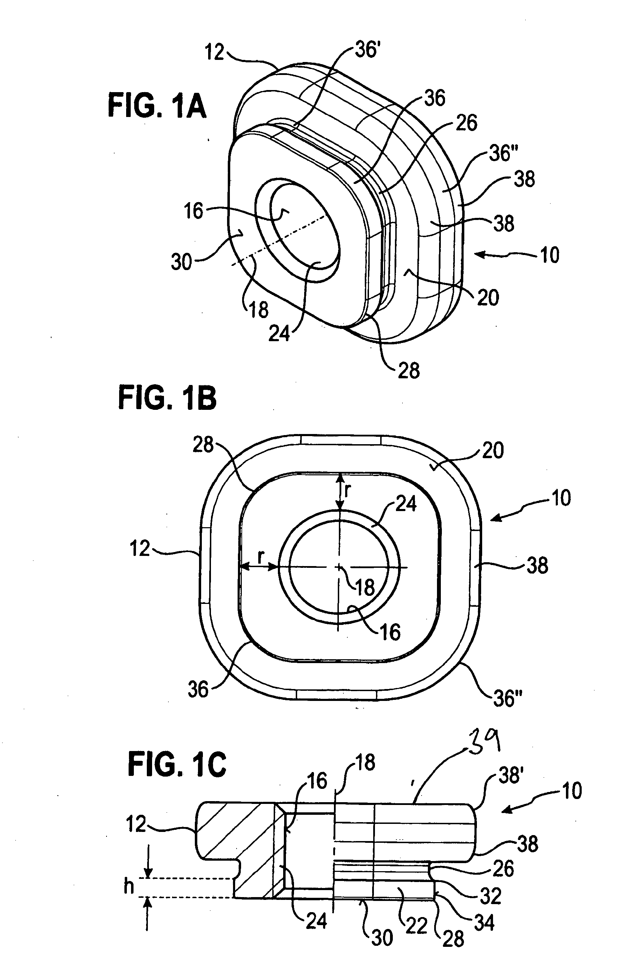

Die Fig. 1A bis 1C zeigen zunächst eine erste Ausführungsform eines erfindungsgemäßen selbststanzenden Mutterelements 10 mit einer Festigkeit im Bereich zwischen 700 und 900 MPa, in Ausnahmefällen bis etwa 1250 MPa das zum Einpressen in ein Blechteil ausgelegt ist, wobei das Mutterelement folgende Merkmale aufweist:

Ein einen Flansch 12 bildendes Kopfteil 14, eine mittlere Bohrung 16 im Kopfteil 14, die zur Aufnahme eines Bolzenelements (nicht gezeigt) ausgelegt ist und eine mittlere Längsachse 18 aufweist, eine in einer Ebene zumindest im Wesentlichen senkrecht zur mittleren Längsachse 18 stehende am Flansch 12 ausgebildete Blechanlagefläche 20 sowie einen sich auf der Seite der Blechanlagefläche vom Kopfteil in Richtung der Längsachse weg erstreckenden Stanzabschnitt 22. Das Bolzenelement kann beispielsweise ein Gewindebolzen sein, weshalb das Mutterelement 10 hier mit einem Gewindezylinder 24 versehen ist, d.h. die Bohrung 16 ist eine Gewindebohrung. Es könnte aber auch ein Bolzen in Form eines Lagerbolzens sein. In diesem Fall wird der Gewindezylinder mit einer glatten Bohrung ersetzt. Die Bohrung könnte allerdings zunächst als glatte Bohrung ausgeführt werden und so bemessen werden, dass ein Gewinde formender oder Gewinde schneidender Bolzen zur Anwendung gelangen kann.

Für das selbststanzende Anbringen des Mutterelements 10 in ein Blechteil höherer Festigkeit oder in ein Blechteil mit einer Dicke größer als 3,5 mm ist das Mutterelement derart ausgelegt, dass der Stanzabschnitt 22 unterhalb der Blechanlagefläche 20, d.h. auf der dem Kopfteil abgewandten Seite des Blechteils, eine umlaufende Rille 26 aufweist und dass er ferner eine Stanzkante 28 an seinem freien Stirnseite 30 aufweist, wobei die Stanzkante 28 von der dieser benachbarten Begrenzung 32 der Rille 26 durch eine Umfangsfläche 34 mit einer axialen Höhe h beabstandet ist, die mindestens 50 % der Blechdicke entspricht. Die obere Begrenzung der Rille 26 liegt hier, wie bei allen weiteren erfindungsgemäßen Ausführungformen, in der gleichen Ebene wie die Blechanlagefläche.

Das selbststanzende Mutterelement der Fig. 1A bis 1C sowie alle weiteren hier offenbarten Mutterelemente entsprechend der vorliegenden Lehre sind insbesondere zur Anwendung mit Blechteilen mit einer Festigkeit im Bereich von größer als 900 bis über 1600 MPa, vorzugsweise von etwa 1500 MPa ausgelegt. Wichtig ist, dass genügend Material hinter, d.h. auf der Kopfteilseite der Stanzkante 28 im Bereich der genannten Umfangsfläche 34 vorhanden ist. Ferner sollte der Stanzabschnitt selbst so ausgelegt sein, d.h. mit einer radialen Dicke und axialer Höhe h, dass unter den Einstanzkräften keine unerwünschte Verformung eintritt. In der Praxis bedeutet dies, dass die axiale Höhe h und die radiale Dicke r des Stanzabschnitts wie folgt bemessen werden sollen:

Die axiale Höhe der genannten Umfangsfläche soll mindestens 30% und vorzugsweise mindestens 50 % der Blechdicke entsprechen, wobei axiale Höhen bis zu 100% der Blechteildicke und sogar darüber hinaus möglich sind, wenn das Element an das Blechteil innerhalb einer Sicke angebracht wird. Wichtig ist im Regelfall, dass die freie Stirnseite nicht über die dem Kopfteil abgewandten Seite des Blechteils vorsteht, wobei üblicherweise die freie Stirnseite bis etwa 0.02 mm gegenüber der genannten Seite des Blechteils zurückversetzt sein soll. Hierdurch kann ein weiteres Bauteil an das Blechteil direkt angeschraubt werden, und es wird die erwünschte Direktklemmung des Bauteils mit dem Blechteil erreicht. Dies bedeutet aber, dass die axiale Höhe des Stanzabschnitts, d.h. der Umfangsfläche zusammen mit der Rille, nicht größer als 100 % der Blechteildicke sein darf, es sei denn, das Mutterelement ist innerhalb einer Sicke am Blechteil angebracht. In diesem Fall ermöglicht die Wahl der axialen Tiefe der Sicke stets eine Anordnung, bei der die freie Stirnseite des Stanzabschnitts des Mutterelements stets von der Ebene der dem Kopfteil des Mutterelements abgewandten Seite des Blechteils außerhalb der Sicke zurücksteht, und zwar unabhängig von der jeweiligen Blechteildicke.

Die radiale Wanddicke r des Stanzabschnitts im Bereich seiner freien Stirnseite von der Außenseite bis zum Nenndurchmesser des Gewindes (d.h. dem Außendurchmesser des Gewindes, d.h. bei einem M8-Gewinde ein Durchmesser von 8 mm und ein Radius vom 4 mm) liegt im Bereich zwischen dem 1,2- bis 1,8- und vorzugsweise dem 1,3- und 1,7- und insbesondere bei etwa dem 1,5-fachen der vorgesehenen Blechteildicke.

Wird die radiale Wanddicke r zu klein gewählt, so besteht die Gefahr der unerwünschten Verformung des Stanzabschnitts, insbesondere bei toleranzmäßig ungünstigen Umständen. Wird er dagegen zu groß gewählt, so wird das Mutterelement unnötig schwer. Der Wert von 1,5 mal die Blechteildicke hat sich als günstig erwiesen.

Bei nicht quadratischen oder kreisförmigen Stanzabschnitten ist die Abmessung r als die kleinste radiale Wanddicke zu verstehen, wie in den Fig. eingezeichnet, wobei die Abmessung r dann auch etwas kleiner als 1,5 mal die Blechteildicke, beispielsweise 1,2 mal die Blechteildicke, gewählt werden kann.

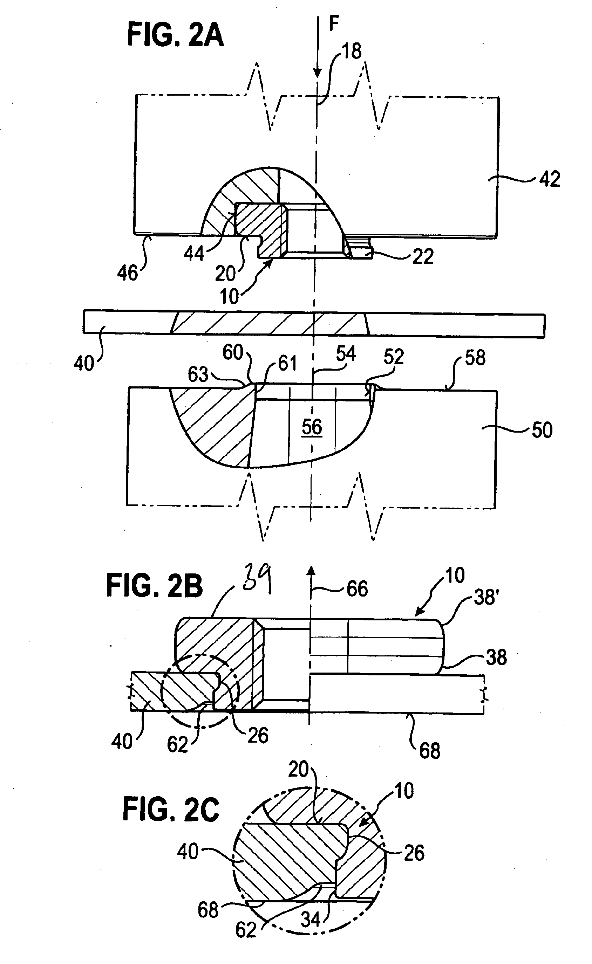

Die Fig. 2A zeigt schematisch die Werkzeuge, die verwendet werden, um das Mutterelement gemäß Fig. 1A bis 1C oder vergleichbare Elemente in ein Blechteil 40 einzustanzen. Das Werkzeug besteht aus einem Setzkopf 42, der mit einer Aufnahme 44 versehen ist, die der Kopfform des Mutterelements 10 angepasst ist, so dass der Stanzabschnitt 22 vor der unteren Stirnseite 46 des Setzkopfes 42 vorsteht. Die Blechanlagefläche 20 des Mutterelements 10 liegt in der gleichen Ebene wie die Stirnseite 46.

Setzköpfe dieser Art sind bestens bekannt und werden üblicherweise für die automatische Zufuhr von Mutterelementen aus einem Vorrat in die Aufnahme 44 ausgelegt. Beispiele für solche Setzköpfe sind unter anderem in der europäischen Patentschrift EP-755749 B2 der vorliegenden Anmelderin enthalten. Ferner könnte beispielsweise ein Setzkopf zur Anwendung gelangen, wie er in GB-A-934101 beschrieben ist.

Unterhalb des Blechteils 40 befindet sich eine Matrize 50 mit einer mittleren Öffnung 52, deren Querschnittsform der des Stanzabschnitts 22 entspricht, wobei die Matrizenöffnung 52 geringfügig größer ausgeführt ist als der Stanzabschnitt 22, damit dieser mit geringem Spiel in die Öffnung 52 hineinpasst. Beispielsweise könnte die Öffnung 52 im Vergleich zum Stanzabschnitt 22 etwa 0,01 mm größer sein. Die Öffnung 52 hat eine mittlere Längsachse 54, die mit der mittleren Längsachse 18 des Mutterelements 10 fluchtet.

Da die Öffnung 52 der Matrize den Stanzabschnitt 22 mindestens im Bereich dessen Stirnkante aufnehmen soll, muss die Matrize im entsprechenden Werkzeug der Presse entsprechend der Ausrichtung des Mutterelements 10 im Setzkopf ausgerichtet sein.

Ferner soll erwähnt werden, dass die Passage 56 unterhalt der Öffnung 52 von dieser weg divergiert, damit der Stanzbutzen, der entsteht, wenn das Mutterelement 10 durch eine sich in Pfeilrichtung F wirkende Kraft gegen das Blechteil und gegen die Matrize gedrückt wird, wodurch ein Stanzbutzen mittels der Zusammenarbeit zwischen dem Stanzabschnitt 22 und der Matrize 50 aus dem Blechteil herausgestanzt wird, schließlich über die divergierende Passage 56 entsorgt wird. In dieser Figur kann ein so genannter Niederhalter (nicht gezeigt) im Setzkopf 42 integriert werden. Dieser Niederhalter hat die Aufgabe, vor dem Durchstanzen des Blechteils 40 dieses fest gegen die Stirnseite 58 der Matrize bzw. gegen das die Matrize 50 aufnehmende Werkzeug zu drücken.

Üblicherweise wird die Matrize 50 im unteren Werkzeug einer Presse aufgenommen, und zwar so, dass die obere Stirnseite in Fig. 2A bündig mit der Oberfläche des unteren Werkzeugs liegt. Der Setzkopf 42 wird dann entweder an einer Zwischenplatte der Presse oder am oberen Werkzeug der Presse montiert. Es ist genauso möglich, die Matrize 50 in der Zwischenplatte einer Presse unterzubringen, und den Setzkopf 42 dann im oberen Werkzeug der Presse anzuordnen. Ferner sind auch umgekehrte Anordnungen möglich, bei denen die Matrize 50 oberhalb des Setzkopfs 42 angeordnet ist, beispielsweise so, dass der Setzkopf 42 nach oben weisend im unteren Werkzeug der Presse oder in der Zwischenplatte der Presse angeordnet ist, während die Matrize dann folgerichtig auch in umgekehrter Position gegenüber Fig. 2A in der Zwischenplatte der Presse bzw. im oberen Werkzeug der Presse anzuordnen wäre.

Schließlich ist es nicht erforderlich, eine Presse zum Einstanzen des Mutterelements 10 zu verwenden, sondern diese Funktion könnte von einem mit entsprechenden Werkzeugen ausgestatteten Roboter oder von einer kraftbetätigten Zange übernommen werden.

Um die Öffnung 52 der Matrize herum befindet sich eine Nase 60, die in Draufsicht eine quadratische Form mit gerundeten Ecken entsprechend der Umrissform des Stanzabschnitts 22 aufweist. Die Nase 60 hat eine senkrechte Flanke 61, die die Öffnung 52 umschließt und eine Schrägflanke 63.

Beim Schließen der Presse bzw. des Werkzeugs gemäß Fig. 2A stanzt der Stanzabschnitt 22 einen Stanzbutzen aus dem Blechteil 40, der dann durch die Passage 56 der Matrize hindurch fällt und aus der Presse entsorgt werden kann. Die Durchstanzung des Blechteils erfolgt aufgrund von Scherkräften, die zwischen der Stanzkante 28 des Stanzabschnitts 22 und der Begrenzung der Öffnung 52 an der Oberseite der Matrize entstehen.

Während des Durchstanzens des Blechteils drückt auch die Ringnase 60 gegen die Unterseite des Blechteils und bildet dort eine Vertiefung 62, die sich um den Stanzabschnitt 22 im Bereich dessen Stirnkante herum erstreckt. Das Material, das durch die Ausbildung der Vertiefung 62 entsteht, wird aufgrund der erheblichen Kompression innerhalb der Presse gezwungen, in die Rille 26 zu fließen, wodurch das Blechteil 40 formschlüssig mit dem Mutterelement 10 verbunden ist. Das Mutterelement 10 ist nämlich verdrehsicher um die Achse 18 im Blechteil gehalten, da hier die quadratische Form des Stanzabschnitts 22, der in einer formangepassten Ausstanzöffnung im Blechteil 40 angeordnet ist, eine gegenseitige Verdrehung des Blechteils und des Mutterelements verhindert. Durch das Material, das sich in der Rille 26 befindet, wird nicht nur eine hohe Lochlaibung zwischen dem Blechteil und dem Mutterelement erzeugt, die auch zur Verdrehsicherung beiträgt, sondern es wird auch ein Formschluss derart erzeugt, dass das Auspressen des Mutterelements aus dem Blechteil 40 in Auspressrichtung 66 nicht möglich ist oder nur bei Anbringung von erheblichen zerstörerischen Kräften. Die Gefahr, dass das Mutterelement 10 nach unten in die entgegengesetzte Richtung (entgegengesetzt zu der Fahrrichtung 66) gedrückt wird, ist deshalb nicht gegeben, weil die Blechanlagefläche 20 vollflächig auf der Oberfläche des Blechteils 40 sitzt und dies verhindert.

Die Überlappung im Bereich der Rille des Stanzabschnitts ist in einem großen Maßstab in Fig. 2C gezeigt. Im Betrieb wird ein weiteres Bauteil an der Unterseite des Blechteils 40 in Fig. 2A angebracht, und zwar mittels eines Schraubbolzens, dessen Gewinde von unten in Fig. 2B kommend in das Gewinde 24 hineingeschraubt wird. Man sieht aus den Zeichnungen der Fig. 2B und 2C, dass die untere Stirnseite 30 des Stanzabschnitts 22 gegenüber der Unterseite 68 des Blechteils leicht zurückversetzt ist. Dies bedeutet, dass in der Anschraubsituation, d.h. wenn ein weiteres Bauteil mittels des oben genannten Schraubbolzens an dem Blechteil 40 befestigt wird, die Stirnseite 30 des Mutterelements so positioniert ist, dass das Blechteil 40 und das weitere Bauteil wenigstens im Bereich des Mutterelements 10 flächig aneinander liegen und gegeneinander im Sinne einer hochwertigen Schraubverbindung verspannt werden können.

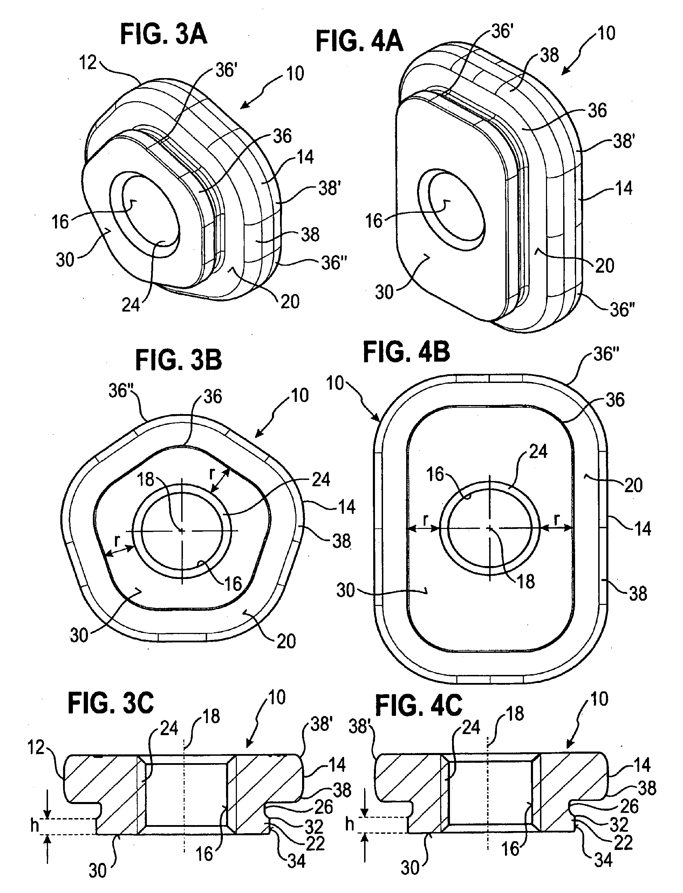

Das selbststanzende Mutterelement gemäß der vorliegenden Lehre ist vorzugsweise so ausgelegt, dass der Stanzabschnitt bzw. die Rille in Draufsicht polygonal sind mit gerundeten Ecken 36 bzw. 36' an den Übergängen von einer Seite des Polygons zur nächsten. Im Beispiel der Fig. 1A bis 1C ist die polygonale Form quadratisch. Bei dem Mutterelement gemäß den Fig. 3A bis 3C ist sie fünfeckig. In Fig. 4A bis Fig. 4C ist sie rechteckig mit zwei unterschiedlichen Seitenlängen. Ansonsten gilt die Beschreibung der Fig. 1A bis 1C auch für die Fig. 3A bis 3C und 4A bis 4C, weshalb dort auch die gleichen Bezugszeichen verwendet werden und die bisherige Beschreibung auch für diese Ausführungsformen gilt. Man merkt auch bei allen diesen Ausführungsformen, dass auch das Kopfteil 14 in Draufsicht eine der polygonalen Form des Stanzabschnitts 22 und der Rille 26 entsprechende polygonale Form aufweist, ebenfalls mit gerundeten Ecken 36". Auch die Übergänge 38, 38' von der Blechanlagefläche 20 in die Seitenwand des Kopfteils bzw. von der Seitenwand des Kopfteils 14 in die dem Stanzabschnitt abgewandte Stirnseite 39 des Mutterelements sind vorzugsweise gerundet, eine Form die ohne weiters bei der Herstellung der Mutterelemente durch Kaltschlagen erzeugt werden kann, wobei gerade die gerundeten Kanten 38 dazu beitragen, dass keine Ermüdungsrisse an der Oberfläche des Blechteils benachbart zum Kopfteil 14 entstehen.

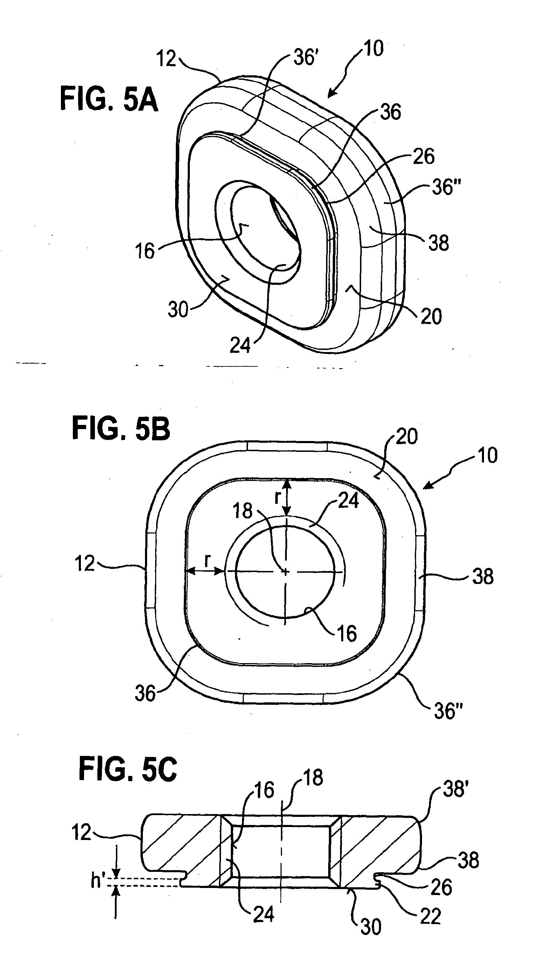

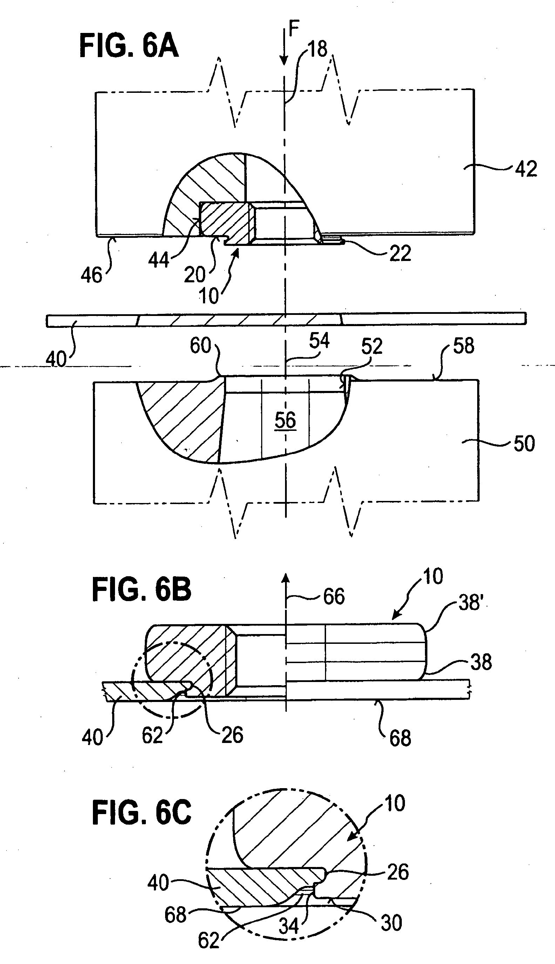

Man sieht aus einem Vergleich der Fig. 1A bis 1C, Fig. 3A bis 3C und Fig. 4A bis 4C, dass die axiale Höhe des Stanzabschnitts bzw. der genannten Umfangsfläche 34 der jeweiligen Blechteildicke angepasst ist. Während die Mutterelemente gemäß den Fig. 1A bis 1C, Fig. 3A bis 3C und Fig. 4A bis 4C für eher dicke hochfeste Blechteile von 2,0 mm Dicke ausgelegt sind, zeigen die Fig. 5A bis 5C ein Mutterelement 10 ähnlich dem der Fig. 1A bis 1C, das aber für dünnere hochfeste Blechteile ausgelegt ist, beispielsweise solche mit einer Blechteildicke von 0,5 mm. Unterschiedlich zu dem Mutterelement gemäß Fig. 1A bis 1C ist im Prinzip nur die axiale Höhe h' der genannten Umfangsfläche des Stanzabschnitts 22 sowie die axiale Höhe der Rille 26, die beide in Anpassung an das Blechteil ausgeführt sind. Die Fig. 5A bis 5C weisen die gleichen Bezugszeichen auf wie die Fig. 1A bis 1C und die bisherige Beschreibung gilt genauso für die entsprechenden Merkmale. Das Mutterelement 10 gemäß Fig. 5A bis 5C wird in das Blechteil 40 gemäß Fig. 6A mittels der dort gezeigten Werkzeuge eingebracht, die genauso ausgelegt sind wie die Werkzeuge der Fig. 2A bis 2C, weshalb auch hier die gleichen Bezugszeichen verwendet werden, wobei die bisherige Beschreibung genauso für die entsprechenden Merkmale gilt.

Der einzige bedeutende Unterschied zwischen der Ausführung gemäß Fig. 2A bis 2C und Fig. 6A bis 6C liegt darin, dass die umlaufende Nase 60 der Matrize in Anpassung an die kleinere Höhe des Stanzabschnitts ebenfalls eine kleinere Höhe aufweist. Das fertig gestellte Zusammenbauteil gemäß Fig. 6B und 6C ist genauso ausgelegt wie das fertig gestellte Zusammenbauteil gemäß Fig. 2B und 2C, d.h. die Stirnseite 30 des Stanzabschnitts 22 steht geringfügig hinter der der Blechanlagefläche 20 abgewandten Seite 68 des Blechteils 40 zurück, um der Anbausituation wie bisher beschrieben gerecht zu werden.

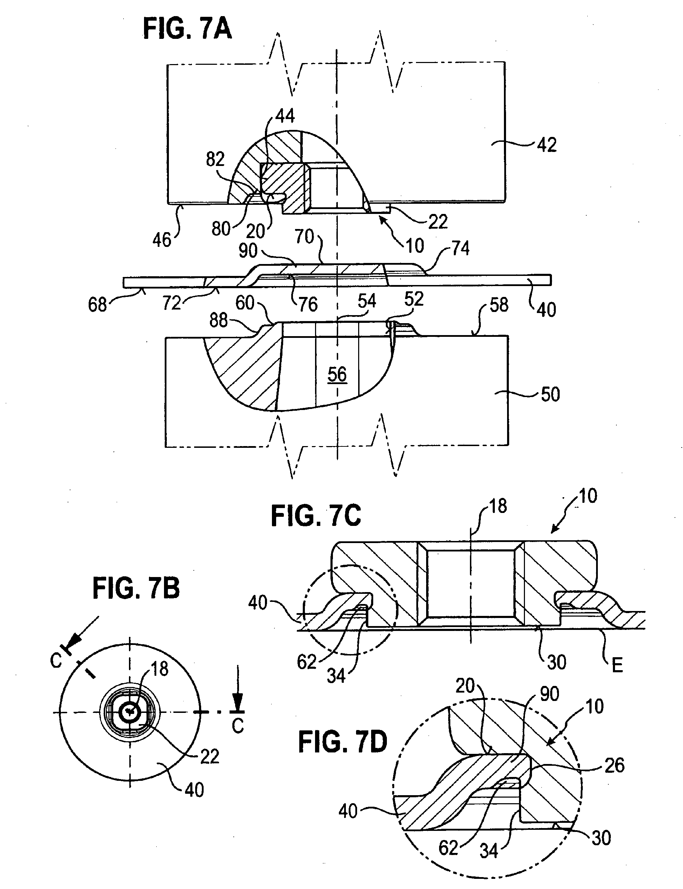

Die Fig. 7A bis 7D zeigen eine weitere Möglichkeit der Anbringung eines Mutterelements in ein Blechteil 40, hier ein Blechteil mittlerer Dicke, wobei allerdings diese Ausführung für alle in Frage kommenden Blechdicken, beispielsweise von etwa O,5 bis 2,0 mm für hochfeste Blechteile oder bis zu 3,5mm und darüber hinaus für dicke Blechteile normaler Festigkeit verwendet werden kann. In diesem Beispiel wird das Blechteil mit einer Sicke 70 vorgesehen, wobei die der Blechanlagefläche 20 abgewandte Seite 72 des Blechteils 40 unmittelbar außerhalb der Sicke 70 in einer Ebene E liegt, und die freie Stirnseite 30 des Stanzabschnitts 22 innerhalb der Sicke 70 vor die der Blechanlagefläche 20 abgewandten Seite 76 des Blechteils innerhalb der Sicke 70 vorsteht, jedoch von der genannten Ebene E zurückversetzt ist.

Um diese Ausführung zu ermöglichen, können Werkzeuge ähnlich denen der Fig. 2A bis 2C bzw. 6A bis 6C zur Anwendung gelangen, jedoch mit gewissen Modifikationen, die jetzt näher erläutert werden.

Im Zusammenhang mit den Fig. 7A-7D werden die gleichen Bezugszeichen für Merkmale bzw. Teile verwendet wie bisher, die die gleiche Auslegung bzw. Funktion haben. Nur die abweichenden Teile bzw. Merkmale werden gesondert beschrieben. Es versteht sich, dass die bisherige Beschreibung für Teile bzw. Merkmale, die mit dem gleichen Bezugszeichen identifiziert sind, genauso für diese Ausführungsform gilt.

Zunächst ist aus Fig. 7A ersichtlich, dass das Mutterelement 10 jetzt etwas weiter zurückversetzt im Setzkopf 42 angeordnet ist und dass die untere Stirnseite des Setzkopfs um das Funktionselement herum eine der Form der Sicke 70 angepasste Vertiefung 80 aufweist. Die Bodenfläche 82 der Vertiefung fluchtet nunmehr mit der Blechanlagefläche 20 des Mutterelements 10. Das Blechteil 40 mit Sicke 70 ist zwischen dem Setzkopf 42 und der Matrize 50 angeordnet und man sieht aus Fig. 7A, dass die Sicke 70 in einem früheren Bearbeitungsschritt vorgefertigt ist. Dies ist allerdings nicht zwangsläufig erforderlich, wie nachfolgend erläutert wird.

Auf jeden Fall ist die Vertiefung 80 im unteren Ende des Setzkopfs so ausgelegt, dass sie der äußeren Kontur 74 der Sicke 70, d.h. der Form oberhalb des Blechteils 40 in Fig. 7A entspricht.

Die Sicke 70 im Blechteil 40 erfordert auch, dass die Matrize modifiziert wird, und zwar derart, dass die Umfangsnase 60 sich nunmehr auf einer Ringstufe 88 befindet, die der inneren Form der Sicke gemäß Fig. 7A angepasst ist. Mit dieser Ausführung erfolgt die Durchstanzung des Blechteils 40 im Bereich des Bodens 90 der Sicke, und zwar genauso wie bisher beschrieben.

Die Zusammenbausituation ist der Fig. 7C bzw. 7D zu entnehmen, wobei die Schnittzeichnung gemäß Fig. 7C entsprechend der Schnittlinie C-C der Fig. 7B vorgenommen ist. Aufgrund dieser Schnittebene, die auf der linken Seite der Fig. 7B durch die gerundete Ecke des Stanzabschnitts geführt wird, weist das Mutterelement 10 eine größere radiale Abmessung links der Mittelachse 18 in Fig. 7C auf als auf der rechten Seite der Fig. 7C, wo die Schnittebene durch die Mitte der einen geraden Seite des in Draufsicht quadratischen Stanzabschnitts 22 vorgenommen wird.

Man sieht aus Fig. 7C, dass hier das Blechteil 40 im Bodenbereich 90 der Sicke die Rille 26 vollständig ausfüllt und dass die ringförmige Nut 62 im Blechteil im unteren Bereich des Bodenteils 90 der Sicke 70 angeordnet ist. Man sieht auch aus Fig. 7C bis Fig. 7D, dass in dieser Ausführungsform die Umfangsfläche 34 des Stanzabschnitts 22 mit einer axialen Höhe ausgeführt ist, die sogar geringfügig größer ist als die Blechdicke. Dies stellt sicher, dass der Stanzabschnitt 22 ausreichend stabil ist, um das Blechteil 40 durchzustanzen. Dadurch, dass die Rille 26 hier das Blechteil aufnimmt, liegt die Umfangsfläche 34 des Stanzabschnitts 22 unterhalb der der Blechanlageseite des Elements abgewandten Seite 76 des Bodenbereichs 90 des Blechteils 40, jedoch noch innerhalb der Sicke 70, so dass die erwünschte Anschraubsituation beim Anschrauben eines weiteren Bauteils auf der Unterseite des Blechteils in Fig. 7C bzw. 7D gewährleistet ist, da das Blechteil 40 und das weitere Bauteil flächig aneinander außerhalb der Sicke anliegen und beim Anziehen des Schraubbolzens das Mutterelement 10 im Sinne einer Vorspannung des Blechmaterials der Sicke 70 gegen das weitere Bauteil gezogen wird, so dass das weitere Bauteil auch gegen die Stirnseite 30 des Stanzabschnitts 22 gedrückt wird. Es soll darauf hingewiesen werden, dass der Betrag, um den die Stirnseite 30 von der Ebene des Blechteils außerhalb der Sicke (die Unterseite des Blechteils außerhalb der Sicke) zurücksteht, in der Praxis relativ gering ist und üblicherweise zwischen 0 und 0,02 mm bemessen ist. Obwohl die Fig. 7A bis 7D die Verwendung eines Blechteils 40 mit einer vorgefertigten Sicke 70 zeigen, ist dies nicht zwangsläufig erforderlich. Man kann genauso mit einem ebenen Blechteil 40 arbeiten, wobei die Sicke dann gleichzeitig mit dem Einstanzen des Mutterelements 10 hergestellt wird.

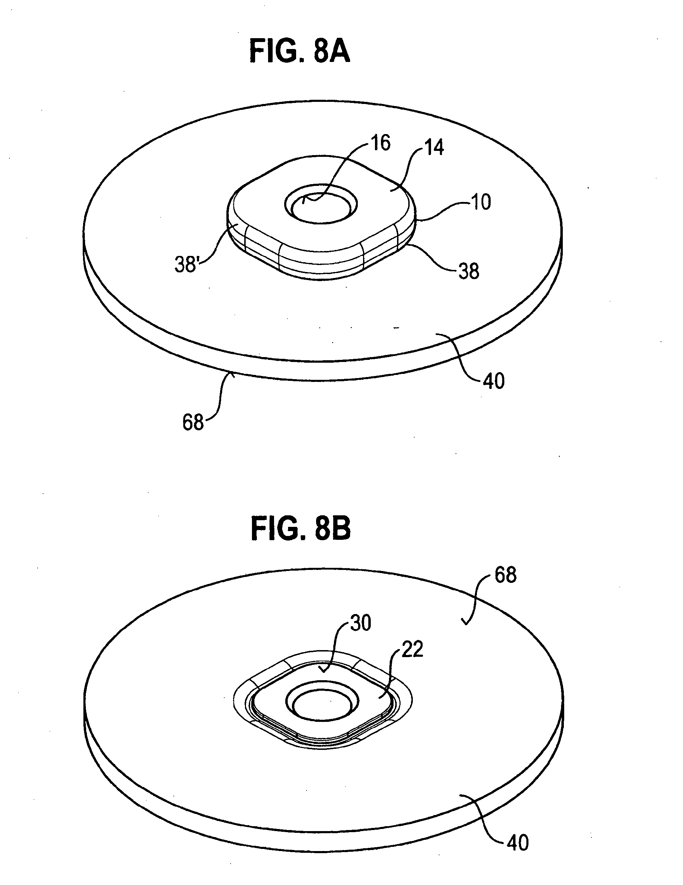

Die Fig. 8A und 8B zeigen in einer perspektivischen Darstellung die Situation, die existiert, wenn das Mutterelement 10 in einem ebenen Blechteil ohne Sicke eingebracht wird. Aus Fig. 8A sieht man, dass das Kopfteil 14 des Mutterelements 10 auf der Oberfläche des Blechteils 40 liegt, jedoch nicht in diese Oberfläche hineinragt. Die Fig. 8B zeigt das Blechteil gemäß Fig. 8A von unten. Hier ist es ersichtlich, dass die Stirnseite 30 des Mutterelements 10 nicht über die Seite des Blechteils vorsteht, die der Blechanlagefläche 20 des Mutterelements 10 abgewandt ist.

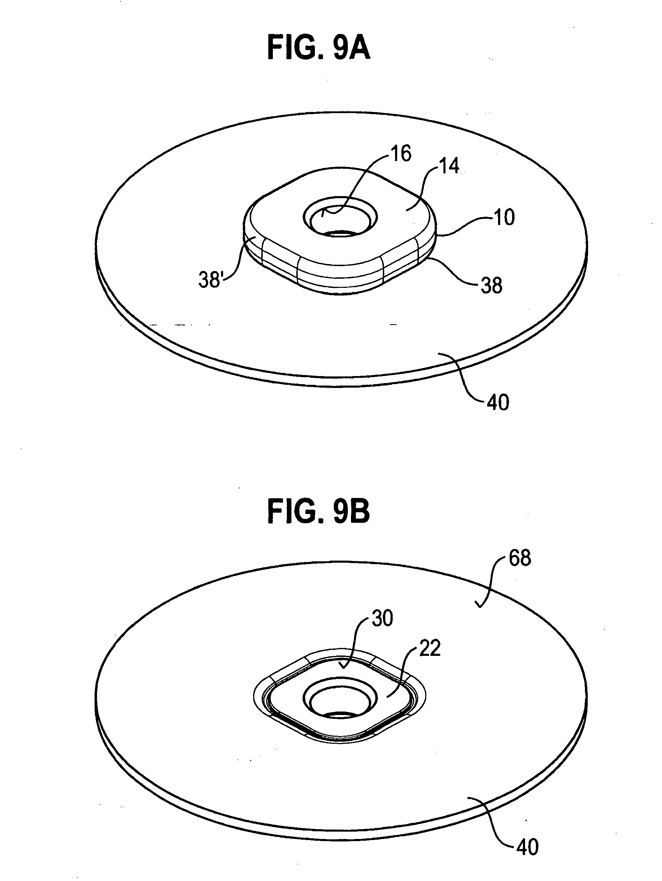

Die Fig. 9A und 9B zeigen dann die gleiche Situation, jedoch hier mit einem dünneren Blechteil unter Anwendung des Mutterelements 10 gemäß Fig. 5A bis 5C. Hier liegt die Blechanlagefläche 20 des Kopfteils 14 des Mutterelements 10 auf der Oberseite des Blechteils in Fig. 9A, ohne dass das Kopfteil im Blechteil 40 versetzt angeordnet ist. Auch in Fig. 9B ist ersichtlich, dass die Stirnseite 30 des Mutterelements 10 nicht über die entsprechende Seite des Blechteils vorsteht.

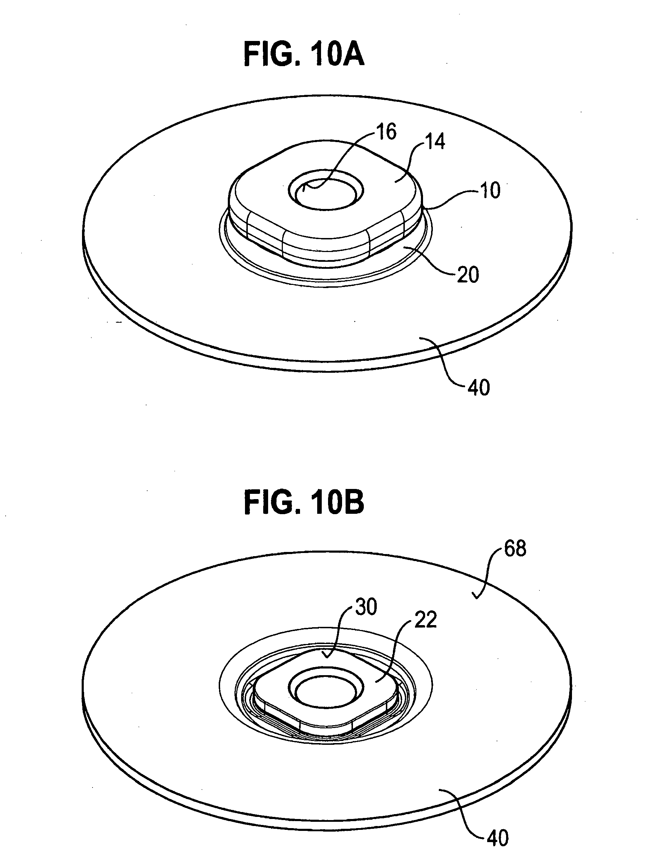

Die Fig. 10A und 10B zeigen dann die entsprechende Anordnung bei Verwendung einer Sicke. Hier liegt die Blechanlagefläche 20 des Mutterelements 10 auf der Oberseite der Bodenfläche des Blechteils 40 in Fig. 10A, während aus Fig. 10B, d.h. in der Darstellung auf der Unterseite des Blechteils gemäß Fig. 10A, ersichtlich ist, dass die Stirnseite 30 des Mutterelements 10 nicht über die in Fig. 10B obere Blechseite 68 des Blechteils vorsteht.

In allen Ausführungen ist das Material des Blechteils formschlüssig in die Rille 26 aufgenommen. Die sonst verwendeten Bezugszeichen sind wie bisher zu verstehen, d.h. die bisherige Beschreibung gilt genauso für Formmerkmale, die mit dem gleichen Bezugszeichen gekennzeichnet sind.

Während in den bisherigen Figuren das Kopfteil des Mutterelements 10 in Draufsicht polygonal ist, ist dies nicht zwangsläufig erforderlich, sondern das Kopfteil 14 kann beispielsweise in Draufsicht kreisrund sein, wie in den Fig. 11A, 11B, 12A und 12B gezeigt, und zwar entweder mit einer Ausführung des Stanzabschnitts, bei der sowohl die Umfangsfläche des Stanzabschnitts als auch die Rille polygonal sind und gerundete Ecken aufweisen als auch mit einem Stanzabschnitt, der selbst in Draufsicht kreisrund oder annähernd kreisrund ist, wie in den Fig. 11A, 11B, 12A und 12B gezeigt ist.

Die Fig. 11A und 11B zeigen ferner wie man durch Auslegung der Stanzmatrize ein Mutterelement 10, das für eine Blechteildicke innerhalb gewisser Grenzen ausgelegt ist, die durch die Stabilität des Stanzabschnitts im Vergleich zur Blechteildicke und -festigkeit bestimmt sind, auch für ein noch dickeres Blechteil verwenden kann, in dem Sinne, dass die Stanzmatrize zur Ausbildung einer ausgeprägten Vertiefung in der in Fig. 11A bzw. 11B Unterseite des Blechteils ausgelegt ist.

Wenn der Stanzabschnitt bzw. die Rille polygonal ausgeführt ist, wird hierdurch die erforderliche Verdrehsicherung durch Formschluss mit dem Blechteil erreicht. Wenn aber der Stanzabschnitt bzw. die Rille kreisrund ausgeführt ist, kann es erforderlich sein, andere Maßnahmen zur Verdrehsicherung zu treffen. Eine Möglichkeit besteht darin, das Mutterelement im Bereich der Blechanlagefläche 20 und der Rille 26 mit einem Klebstoff zu versehen, beispielsweise ein solcher, der unter Druck aushärtet.

Eine andere Möglichkeit, die in Fig. 11A, 11B, 12A und 12B gezeigt ist, besteht darin, Verdrehsicherungsnasen 91 vorzusehen, die die Form von sich in axialer Richtung erstreckenden Rippen am Stanzabschnitt 22 aufweisen, die an dem zylindrischen Abschnitt 34 und in der Rille 26 angeordnet sein können.

Wenn das Mutterelement mit Verdrehsicherungsnasen vorgesehen ist, die die Form von sich in axialer Richtung erstreckenden Rippen am Stanzabschnitt aufweisen, die an der Umfangsfläche und/oder in der Rille angeordnet sind, sind im fertig gestellten Zusammenbauteil Verdrehsicherungsvertiefungen 92 entsprechend der Form der Verdrehsicherungsrippen im Lochrand des Blechteils ausgebildet.

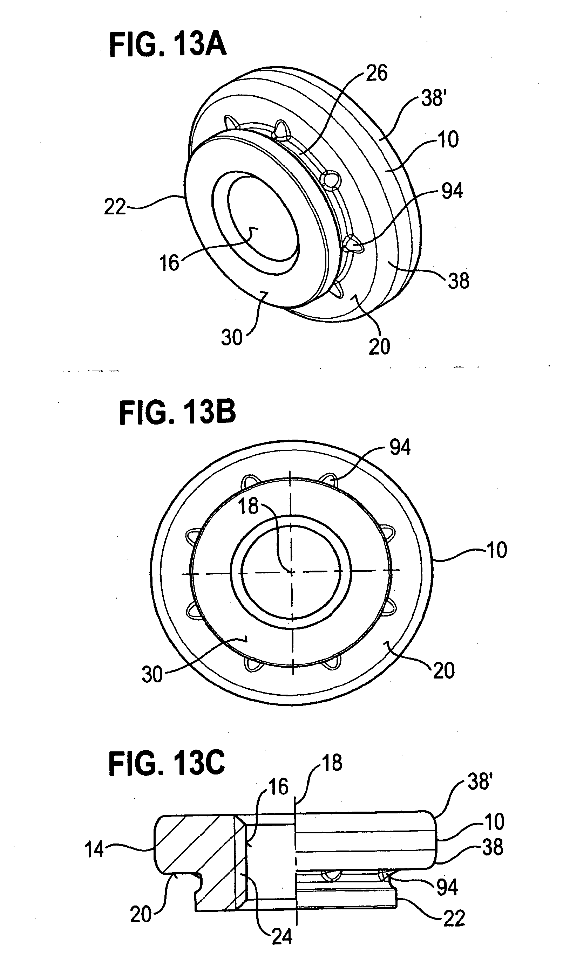

Alternativ hierzu können, wie in den Fig. 13A bis 13C gezeigt, sich innerhalb der Rille radial erstreckende Rippen 94 vorgesehen werden, die in Seitenansicht zumindest im Wesentlichen dreieckig sind.

Wenn das Mutterelement mit Verdrehsicherungsnasen 94 vorgesehen ist, die die Form von sich innerhalb der Rille radial erstreckenden Rippen aufweisen, die in Seitenansicht zumindest im Wesentlichen dreieckig sind, weist das fertig gestellte Zusammenbauteil Verdrehsicherungsvertiefungen entsprechend der Form der Verdrehsicherungsrippen im Lochrand des Blechteils auf.

Das Ergebnis der Anbringung eines Mutterelementes 10 gemäß der vorliegenden Lehre ist ein Zusammenbauteil bestehend aus dem selbststanzenden Mutterelement 10 und einem Blechteil 40 und zeichnet sich dadurch aus, dass das Blechteil 40 ein Stanzloch mit einer Form entsprechend der Form des Stanzabschnitts 22 aufweist, dass das Material des Blechteils 40 auf der der Blechanlagefläche 20 abgewandten Seite des Blechteils benachbart zum Stanzabschnitt eine den Stanzabschnitt umgebende Vertiefung 62 aufweist, und dass das Material des Lochrandes aufgrund der Ausbildung der Vertiefung in die Rille 26 hinein verdrängt ist.

Besonders günstig ist es, wenn das Blechteil 40 im Bereich der Anbringung des Mutterelements und auch radial außerhalb dieses Bereichs in einer Ebene liegt und die freie Stirnseite 30 des Stanzabschnitts 22 von der der Blechanlagefläche abgewandten Seite zurückversetzt ist.

Es sind an dieser Stelle einige Anmerkungen angebracht. Der Stanzabschnitt 22 bzw. die Rille 26 können in Draufsicht eine Form aufweisen, die aus der Gruppe quadratisch, rechteckig, fünfeckig oder sechseckig ausgewählt ist.

Die Umfangsfläche 34 kann in beliebigen radialen Ebenen, die die Längsachse 18 einschließen, entweder einen achsparallelen Verlauf oder einen zu der Längsachse eingeschlossenen Winkel von größer als 0° bis 5° aufweisen, wobei die Umfangsfläche 34 von der Rille 26 bis zu der Stanzkante 28 gehend einen divergierenden Verlauf hat.

Der Übergang von der Umfangsfläche 34 zu der Rille 26 ist entweder gerundet oder weist die Form einer Schrägfläche auf, mit einem eingeschlossenen Winkel im Bereich zwischen 30° und 75° bezogen auf die mittlere Längsachse 18 und in Richtung von dem Stanzabschnitt 22 zum Kopfteil 14 gehend.

Bei allen Ausführungsformen können als Beispiel für den Werkstoff der Befestigungselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654.

## Patentansprüche

1. Selbststanzendes Mutterelement (10), das zum Einpressen in ein Blechteil (40) ausgelegt ist, wobei das Mutterelement folgende Merkmale aufweist:
ein einen Flansch (12) bildendes Kopfteil (14), eine mittlere mit einem Gewinde versehene oder versehbare, einen Nenndurchmesser aufweisende Bohrung (16) im Kopfteil, die zur Aufnahme eines Bolzenelements ausgelegt ist und eine mittlere Längsachse (18) aufweist, eine in einer Ebene zumindest im Wesentlichen senkrecht zur mittleren Längsachse stehende am Flansch (12) ausgebildete Blechanlagefläche (20) sowie einen sich auf der Seite der Blechanlagefläche vom Kopfteil in Richtung der Längsachse weg erstreckenden Stanzabschnitt (22), wobei der Stanzabschnitt (22) unterhalb der Blechanlagefläche (20) eine umlaufende Rille (26) aufweist und der Stanzabschnitt (22) eine Stanzkante (28) an seiner freien Stirnseite aufweist,
**dadurch gekennzeichnet, dass** das selbststanzendes Mutterelement eine Festigkeit im Bereich zwischen 700 und 900 MPa, in Ausnahmefällen bis zu 1250 MPa aufweist und zum selbststanzenden Anbringen des Mutterelements in ein Blechteil (40) höherer Festigkeit oder in ein Blechteil mit einer Dicke größer als 3,5 mm derart ausgelegt ist, dass die Stanzkante (28) von der dieser benachbarten Begrenzung der Rille (26) durch eine Umfangsfläche (34) mit einer axialen Höhe beabstandet ist, die mindestens 30 % und vorzugsweise mindestens 50 % der Blechdicke entspricht, wobei die radiale Wanddicke des Stanzabschnitts im Bereich seiner freien Stirnseite von der Außenseite des Stanzabschnitts bis zum Nenndurchmesser einer Dicke zwischen dem 1,2-bis 1,8- und vorzugsweise dem 1,5-fachen der vorgesehenen Blechteildicke entspricht.

2. Selbststanzendes Mutterelement (10) gemäß Anspruch 1, **dadurch gekennzeichnet, dass** es ausgelegt ist, um mit Blechteilen mit einer Festigkeit im Bereich von größer als 900 bis über 1600 MPa, vorzugsweise von etwa 1500 MPa, verwendet zu werden.

3. Selbststanzendes Mutterelement gemäß Anspruch 1, **dadurch gekennzeichnet, dass** der Stanzabschnitt (22) bzw. die Rille (26) in Draufsicht polygonal sind mit gerundeten Ecken (36, 36') an den Übergängen von einer Seite des Polygons zur nächsten.

4. Selbststanzendes Mutterelement nach Anspruch 3, **dadurch gekennzeichnet, dass** auch das Kopfteil (14) in Draufsicht eine der polygonalen Form des Stanzabschnitts (22) und der Rille (26) entsprechende polygonale Form aufweist, ebenfalls mit gerundeten Ecken (36").

5. Selbststanzendes Mutterelement nach einem der Ansprüche 3 bis 4, **dadurch gekennzeichnet**, das der Stanzabschnitt (22) bzw. die Rille (26) in Draufsicht eine Form aufweisen, die aus der Gruppe quadratisch, rechteckig, fünfeckig oder sechseckig ausgewählt ist.

6. Selbststanzendes Mutterelement nach Anspruch 1 oder 2, **dadurch gekennzeichnet, dass** der Stanzabschnitt bzw. die Rille und/oder das Kopfteil jeweils in Draufsicht zumindest im Wesentlichen kreisrund sind.

7. Selbststanzendes Mutterelement nach einem der vorhergehenden Ansprüche, **dadurch gekennzeichnet, dass** die Umfangsfläche (34) in beliebigen radialen Ebenen, die die Längsachse (18) einschließen, entweder einen achsparallelen Verlauf oder einen zu der Längsachse eingeschlossenen Winkel von größer als 0° bis 5° aufweist, wobei die Umfangsfläche (34) von der Rille (26) bis zu der Stanzkante (28) gehend einen divergierenden Verlauf hat.

8. Selbststanzendes Mutterelement nach einem der vorhergehenden Ansprüche, **dadurch gekennzeichnet, dass** der Übergang von der Umfangsfläche (34) zu der Rille (26) gerundet ist oder die Form einer Schrägfläche aufweist, mit einem eingeschlossenen Winkel im Bereich zwischen 30° und 75° bezogen auf die mittlere Längsachse (18) und in Richtung von dem Stanzabschnitt (22) zum Kopfteil (14) gehend.

9. Selbststanzendes Mutterelement nach einem der vorhergehenden Ansprüche, **dadurch gekennzeichnet, dass** Verdrehsicherungsnasen (90, 94) vorgesehen sind, die entweder die Form von sich in axialer Richtung erstreckenden Rippen (90) am Stanzabschnitt aufweisen, die an dem zylindrischen Abschnitt (34) und/oder in der Rille (26) angeordnet sein können, oder die Form von sich innerhalb der Rille radial erstreckenden Rippen (94), die in Seitenansicht zumindest im Wesentlichen dreieckig sind, aufweisen.

10. Zusammenbauteil bestehend aus einem selbststanzenden Mutterelement (10) nach einem der vorhergehenden Ansprüche und einem Blechteil (14), **dadurch gekennzeichnet, dass** das Blechteil (40) ein Stanzloch mit einer Form entsprechend der Form des Stanzabschnitts (22) aufweist, dass das Material des Blechteils (40) auf der der Blechanlagefläche (20) abgewandten Seite (68) des Blechteils benachbart zum Stanzabschnitt eine den Stanzabschnitt (22) umgebende Vertiefung aufweist (62), und dass das Material des Lochrandes aufgrund der Ausbildung der Vertiefung (62) in die Rille (26) hinein verdrängt ist.

11. Zusammenbauteil nach dem Anspruch 10, **dadurch gekennzeichnet, dass** das Blechteil (40) eine Festigkeit im Bereich von größer als 900 bis über 1400 MPa aufweist.

12. Zusammenbauteil nach Anspruch 10 oder 11, **dadurch gekennzeichnet, dass** das Blechteil (40) im Bereich der Anbringung des Mutterelements (10) und auch radial außerhalb dieses Bereichs in einer Ebene (E) liegt, und dass die freie Stirnseite (30) des Stanzabschnitts (22) von der der Blechanlagefläche (20) abgewandten Seite zurückversetzt ist.

13. Zusammenbauteil nach Anspruch 10 oder 11, **dadurch gekennzeichnet, dass** das Blechteil (40) mit einer Sicke (70) vorgesehen ist, dass die der Blechanlagefläche (20) abgewandte Seite des Blechteils (40) unmittelbar außerhalb der Sicke in einer Ebene (E) liegt, und dass die freie Stirnseite (30) des Stanzabschnitts (22) innerhalb der Sicke (70) vor die der Blechanlagefläche abgewandten Seite (76) des Blechteils (40) vorsteht, jedoch von der genannten Ebene (E) zurückversetzt ist.

14. Zusammenbauteil nach einem der vorhergehenden Ansprüche 10 bis 13, **dadurch gekennzeichnet, dass**, wenn das Mutterelement (10) mit Verdrehsicherungsnasen (90) vorgesehen ist, die die Form von sich in axialer Richtung erstreckenden Rippen am Stanzabschnitt (22) aufweisen, die an der Umfangsfläche (34) und/oder in der Rille (26) angeordnet sind, Verdrehsicherungsvertiefungen (92) entsprechend der Form der Verdrehsicherungsrippen im Lochrand des Blechteils (40) ausgebildet sind.

15. Zusammenbauteil nach einem der vorhergehenden Ansprüche 10 bis 13, **dadurch gekennzeichnet, dass**, wenn das Mutterelement (10) mit Verdrehsicherungsnasen vorgesehen ist, die die Form von sich innerhalb der Rille (26) radial erstreckenden Rippen (94), die in Seitenansicht zumindest im Wesentlichen dreieckig sind, Verdrehsicherungsvertiefungen entsprechend der Form der Verdrehsicherungsrippen im Lochrand des Blechteils (40) ausgebildet sind.

## Claims

1. A self-piercing nut element (10) that is designed to be pressed into a sheet metal part (40), with the nut element having the following features:
a head part (14) forming a flange (12), a central bore (16) in the head part which is designed to receive a bolt element, which has a central longitudinal axis (18) and a nominal diameter and which has a thread or can be provided with a thread, a sheet metal contact surface (20) formed in a plane at least substantially perpendicular to the central longitudinal axis at the flange (12), as well as a piercing section (22) extending away from the head part at the side of the sheet metal contact surface in the direction of the longitudinal axis, wherein the piercing section (22) has a peripheral extending groove (26) below the sheet metal contact surface (20) and wherein the piercing section (22) has a piercing edge (28) at its free end face, **characterized in that** the self-piercing nut element has a strength in the range between 700 and 900 MPa, in exceptional cases up to 1250 MPa and for the self-piercing attachment of the nut element into a sheet metal part (40) of higher strength, or into a sheet metal part with a thickness of greater than 3.5 mm, with the nut element being designed in such a way that the piercing edge (28) is spaced apart from the boundary of the groove (26) adjacent to the piercing edge by a peripheral surface (34) having an axial height which corresponds to at least 30% and preferably to at least 50% of the sheet metal thickness, wherein the radial wall thickness of the piercing section in the region of its free end face from the outer side of the piercing section up to the nominal diameter corresponds to a thickness between 1.2 to 1.8 and preferably 1.5 times the intended sheet metal thickness.

2. A self-piercing nut element (10) in accordance with claim 1, **characterized in that** it is designed to be used with sheet metal parts having a strength in the range from greater than 900 to over 1600 MPa, preferably of about 1500 MPa.

3. A self-piercing nut element in accordance with claim 1, **characterized in that** the piercing section (22) and/or the groove (26) is/are polygonal in plan view with rounded corners (36, 36') at the transitions from one side of the polygon to the next.

4. A self-piercing nut element in accordance with claim 3, **characterized in that** the head part (14) in plan view also has a polygonal form corresponding to the polygonal form of the piercing section (22) and of the groove (26), likewise with rounded corners (36").

5. A self-piercing nut element in accordance with one of the claims 3 to 4, **characterized in that** the piercing section (22) and/or the groove (26) has a shape in plan view which is selected from the group of square, rectangular, pentagonal and hexagonal.

6. A self-piercing nut element in accordance with claim 1 or claim 2, **characterized in that** the piercing section and/or the groove and/or the head part is/are each at least substantially circular in plan view.

7. A self-piercing nut element in accordance with any one of the preceding claims, **characterized in that** the peripheral surface (34) in any desired radial plane which includes the longitudinal axis (18) either has an axially parallel extent or an enclosed angle with respect to the longitudinal axis of greater than 0° to 5°, wherein the peripheral surface (34) has a diverging extent extending from the groove (26) up to the piercing edge (28).

8. A self-piercing nut element in accordance with any one of the preceding claims, **characterized in that** the transition from the peripheral surface (34) to the groove (26) is rounded or has the form of an oblique surface having an enclosed angle in the range between 30° and 75° with respect to the central longitudinal axis (18) and going in the direction from the piercing section (22) to the head part (14).

9. A self-piercing nut element in accordance with any one of the preceding claims, **characterized in that** noses providing security against rotation (90, 94) are provided which either have the form of ribs (90) extending in the axial direction at the piercing section, which can be arranged at the cylindrical section (34) and/or in the groove (26), or have the form of radially extending ribs (94) within the groove which are at least substantially of triangular shape in side view.

10. A component assembly composed of a self-piercing nut element (10) in accordance with any one of the preceding claims and a sheet metal part (14), **characterized in that** the sheet metal part (40) has a pierced hole having a shape corresponding to the shape of the piercing section (22); **in that** the material of the sheet metal part (40) at the side (68) of the sheet metal part disposed remote from the sheet metal contact surface (20) has a recess (62) adjacent to the piercing section and surrounding the piercing section (22) and **in that** the material of the margin of the hole is displaced into the groove (26) as a result of the formation of the recess (62).

11. A component assembly in accordance with claim 10, **characterized in that** the sheet metal part (40) has a strength in the range from greater than 900 up to above 1400 MPa.

12. A component assembly in accordance with claim 10 or claim 11, **characterized in that** the sheet metal part (40) lies in a plane (E) in the region of the attachment of the nut element (10) and also radially outside of this region; and **in that** the free end face (30) of the piercing section (22) is set back from the side remote from the sheet metal contact surface (20).

13. A component assembly in accordance with claim 10 or claim 11, **characterized in that** the sheet metal part (40) is provided with a depression (70), **in that** the side of the sheet metal part (40) remote from the sheet metal contact surface (20) lies directly outside of the depression in a plane (E) and **in that** the free end face (30) of the piercing section (22) projects within the depression (70) in front of the side (76) of the sheet metal part (40) remote from the sheet metal contact surface, but is offset rearwardly from the said plane (E).

14. A component assembly in accordance with any one of the claims 10 to 13, **characterized in that** when the nut element (10) is provided with noses (90) providing security against rotation which have the shape of ribs extending in the axial direction at the piercing section (22) which are arranged at the peripheral surface (34) and/or in the groove (26), recesses (92) providing security against rotation corresponding to the shape of the ribs providing security against rotation are formed in the margin of the hole of the sheet metal part (40) in accordance with the shape of the ribs providing security against rotation.

15. A component assembly in accordance with any one of the claims 10 to 13, **characterized in that** when the nut element (10) is provided with noses providing security against rotation which have the form of ribs (94) extending radially within the groove (26) and which are at least substantially of triangular shape in side view, recesses providing security against rotation are formed in the margin of the hole of the sheet metal part (40) in accordance with the shape of the ribs providing security against rotation.

## Revendications

1. Élément formant écrou autopoinçonneur (10), qui est conçu pour être enfoncé à la presse dans une pièce en tôle (40), ledit élément formant écrou comprenant les éléments techniques suivants :
une partie de tête (14) formant une bride (12), un perçage central (16) dans la partie de tête, doté d'un taraudage ou susceptible de l'être, présentant un diamètre nominal, qui est conçu pour recevoir un élément formant boulon et qui comporte un axe longitudinal central (18), une surface d'appui de tôle (20) ménagée sur la bride (12) et dressée dans un plan au moins sensiblement perpendiculaire à l'axe longitudinal central, ainsi qu'un tronçon de poinçonnage (22) qui s'étend sur le côté de la surface d'appui de tôle dans une direction en éloignement de l'axe longitudinal, dans lequel le tronçon de poinçonnage (22) comporte au-dessous de la surface d'appui de tôle (20) une rainure périphérique (26), et le tronçon de poinçonnage (22) comporte une arête de poinçonnage (28) sur sa face frontale libre,
**caractérisé en ce que** l'élément formant écrou autopoinçonneur présente une résistance dans la plage entre 700 et 900 MPa, dans des cas exceptionnels jusqu'à 1250 MPa et, en vue d'appliquer l'élément formant écrou par autopoinçonnage dans une pièce en tôle (40) de plus forte résistance ou dans une pièce en tôle avec une épaisseur supérieure à 3,5 mm, il est conçu de telle manière que l'arête de poinçonnage (28) est située, depuis la délimitation voisine de la rainure (26), via une surface périphérique (34) présentant une hauteur axiale, à une distance qui correspond au moins à 30 % et de préférence au moins à 50 % de l'épaisseur de tôle, dans lequel l'épaisseur radiale de la paroi du tronçon de poinçonnage dans la zone de sa face frontale libre, depuis le côté extérieur du tronçon de poinçonnage jusqu'au diamètre nominal correspond à une épaisseur entre 1,2 jusqu'à 1,8, et de préférence à 1,5 fois l'épaisseur de tôle prévue.

2. Élément formant écrou autopoinçonneur (10) selon la revendication 1, **caractérisé en ce qu'**il est conçu pour être utilisé avec des pièces en tôle avec une résistance dans la plage supérieure à 900 jusqu'à plus de 1600 MPa, de préférence d'environ 1500 MPa.

3. Élément formant écrou autopoinçonneur selon la revendication 1, **caractérisé en ce que** le tronçon de poinçonnage (22), ou respectivement la rainure (26) est polygonal(e) en vue de dessus avec des coins arrondis (36, 36') au niveau des transitions depuis un côté du polygone jusqu'au suivant.

4. Élément formant écrou autopoinçonneur selon la revendication 3, **caractérisé en ce que** la partie de tête (14) présente également en vue de dessus une forme polygonale, correspondant à la forme polygonale du tronçon de poinçonnage (22) et de la rainure (26), également avec des coins arrondis (36").

5. Élément formant écrou autopoinçonneur selon l'une des revendications 3 et 4, **caractérisé en ce que** le tronçon de poinçonnage (22) ou respectivement la rainure (26) présente en vue de dessus une forme qui est sélectionnée parmi le groupe des formes quadratique, rectangulaire, pentagonale ou hexagonale.

6. Élément formant écrou autopoinçonneur selon la revendication 1 ou 2, **caractérisé en ce que** le tronçon de poinçonnage ou respectivement la rainure et/ou la partie de tête sont au moins sensiblement circulaires en vue de dessus.

7. Élément formant écrou autopoinçonneur selon l'une des revendications précédentes, **caractérisé en ce que** la surface périphérique (34) présente, dans des plans radiaux quelconques qui incluent l'axe longitudinal (18), soit un tracé parallèle à l'axe soit un tracé avec un angle supérieur à 0° jusqu'à 5° par rapport à l'axe longitudinal, et la surface périphérique (34) a un tracé divergent en allant de la rainure (26) jusqu'à l'arête de poinçonnage (28).

8. Élément formant écrou autopoinçonneur selon l'une des revendications précédentes, **caractérisé en ce que** la transition depuis la surface périphérique (34) jusqu'à la rainure (26) est arrondie ou présente la forme d'une surface oblique, avec un angle inclus dans la plage entre 30° et 75° par référence à l'axe longitudinal médian (18), en allant en direction depuis le tronçon de poinçonnage (22) jusqu'à la partie de tête (14).

9. Élément formant écrou autopoinçonneur selon l'une des revendications précédentes, **caractérisé en ce qu'**il est prévu des ergots antirotation (90, 94), qui présentent soit la forme de nervures (90) s'étendant sur le tronçon de poinçonnage en direction axiale, et qui peuvent être agencés sur le tronçon cylindrique (34) et/ou dans la rainure (26), soit la forme de nervures (94) s'étendant radialement à l'intérieur de la rainure, qui sont au moins sensiblement triangulaires en vue de côté.

10. Assemblage de composants constitués d'un élément formant écrou autopoinçonneur (10) selon l'une des revendications précédentes, et d'une pièce en tôle (40), **caractérisé en ce que** la pièce en tôle (40) comporte un trou poinçonné avec une forme correspondant à la forme du tronçon de poinçonnage (22), **en ce que** le matériau de la pièce en tôle (40) comporte, sur le côté (68) de la pièce en tôle détournée de la surface d'appui de tôle (20) et au voisinage du tronçon de poinçonnage, un renfoncement qui entoure le tronçon de poinçonnage (22), et **en ce que** le matériau de la bordure du trou est forcé en pénétration dans la rainure (26) grâce à la réalisation du renfoncement (62).

11. Assemblage de composants selon la revendication 10, **caractérisé en ce que** la pièce en tôle (40) présente une résistance dans la plage supérieure à 900 jusqu'à plus de 1400 MPa.

12. Assemblage de composants selon la revendication 10 ou 11, **caractérisé en ce que** la pièce en tôle (40) est disposée dans un plan (E), dans la région de l'application de l'élément formant écrou (10) et également radialement à l'extérieur de cette région, et **en ce que** le côté frontal libre (30) du tronçon de poinçonnage (22) est en retrait depuis le côté détourné de la surface d'appui de tôle (20).

13. Assemblage de composants selon la revendication 10 ou 11, **caractérisé en ce que** la pièce en tôle (40) est dotée d'une moulure (70), **en ce que** le côté de la pièce en tôle (40) détourné de la surface d'appui de tôle (20) immédiatement à l'extérieur de la moulure est disposé dans un plan (E), et **en ce que** le côté frontal libre (30) du tronçon de poinçonnage (22) à l'intérieur de la moulure (70) dépasse en avant du côté (76) de la pièce en tôle (40) détourné de la surface d'appui de tôle, mais est en retrait par rapport au plan précité (E).

14. Assemblage de composants selon l'une des revendications 10 à 13, **caractérisé en ce que**, quand l'élément formant écrou (10) est pourvu d'ergots antirotation (90) qui présentent la forme de nervures (22) s'étendant en direction axiale sur le tronçon de poinçonnage et qui sont agencés sur la surface périphérique (34) et/ou dans la rainure (26), des renfoncements antirotation (92) correspondant à la forme des nervures antirotation sont ménagés dans la bordure du trou de la pièce en tôle (40).

15. Assemblage de composants selon l'une des revendications précédentes 10 à 13, **caractérisé en ce que**, quand l'élément formant écrou (10) est pourvu d'ergots antirotation qui présentent la forme de nervures (94) s'étendant radialement à l'intérieur de la rainure (26), nervures qui sont au moins sensiblement triangulaires en vue de côté, des renfoncements antirotation correspondants à la forme des nervures antirotation sont ménagés dans la bordure du trou de la pièce en tôle (40).
